# EUROPEAN PATENT APPLICATION

(11) **EP 4 379 539 A1**
(43) Date of publication of application: **05.06.2024**
(21) Application number: 22863023.2
(22) Date of filing: 05.08.2022
(51) Int. Cl.: G06F 8/41

(54) **METHOD AND APPARATUS FOR DETERMINING DEPENDENCY RELATIONSHIP BETWEEN SERVICES, ELECTRONIC DEVICE, AND COMPUTER READABLE STORAGE MEDIUM**

(30) Priority: 30.08.2021 CN 202111005086
(71) Applicant: ZTE Corporation, Shenzhen, Guangdong 518057 (CN)
(72) Inventor: NI, Jinquan, Shenzhen, Guangdong 518057 (CN); LI, Xing, Shenzhen, Guangdong 518057 (CN); PU, Jiange, Shenzhen, Guangdong 518057 (CN); XU, Daigang, Shenzhen, Guangdong 518057 (CN); LI, Xiaojin, Shenzhen, Guangdong 518057 (CN)
(74) Representative: Ipsilon
(86) International application number: PCT/CN2022/110599
(87) International publication number: WO 2023/029882

(57) **Abstract**

The present application provides a method for determining a dependency relationship between services, including: performing semantic recognition on a micro-service code file to determine a target code fragment, with the target code fragment including a code statement representing a call request between services; extracting a target parameter representing the call request between services from the code statement; and determining the dependency relationship between services according to the target parameter. The present application further provides an apparatus for determining a dependency relationship between services, an electronic device, and a computer readable storage medium.

## Description

### CROSS-REFERENCE TO RELATED APPLICATIONS

The present application claims the priority of Chinese Patent Application No. 202111005086.3, filed on August 30, 2021, the contents of which are incorporated herein in their entirety by reference.

### TECHNICAL FIELD

The present application relates to communication technologies, and in particular, to a method for determining a dependency relationship between services, an apparatus for determining a dependency relationship between services, an electronic device, and a computer readable storage medium.

### BACKGROUND

In order to solve a pain point of a monolithic application, a micro-service has become an important definition of a cloud native system, and a scale of the micro-service is increased explosively. Some security issues are raised as an increase of a scale of micro-service architecture and its applications. For example, there are three services A, B and C in a certain cloud native system, and A is only dependent on B and C in services, and B is dependent on C in services, access rights corresponding to the three services should be respectively set as: A cannot be accessed by others, B can only be accessed by A, and C can be accessed by A, B.

In some related arts, a following manner is generally used to determine a dependency relationship between micro-services: acquiring micro-service code files of a plurality of micro services, recognizing initialization information of each micro-service in the plurality of the micro-services from the micro-service code files, and extracting a target service dependency relationship from the initialization information. The initialization information may include: a dependency package for service operation and a micro-service associated with service initialization. However, the integrity of a resulted dependency relationship between services is not very high.

### SUMMARY

In a first aspect, an embodiment of the present application provides a method for determining a dependency relationship between services, including: performing semantic recognition on a micro-service code file to determine a target code fragment, the target code fragment including a code statement representing a call request between services; extracting a target parameter representing the call request between services from the code statement; and determining the dependency relationship between services according to the target parameter.

In a second aspect, an embodiment of the present application provides an apparatus for determining a dependency relationship between services, including: a code fragment determination module configured to perform semantic recognition on a micro-service code file to determine a target code fragment, the target code fragment including a code statement representing a call request between services; a parameter extraction module configured to extract a target parameter representing the call request between services from the code statement; and a dependency relationship determination module configured to determine the dependency relationship between services according to the target parameter.

In a third aspect, an embodiment of the present application provides an electronic device, including: at least one processor; a storage device storing at least one computer program thereon, the at least one computer program, executed by the at least one processor, causes the at least one processor to perform the method for determining the dependency relationship between services described in the first aspect; and at least one I/O interface connected between the processor and the storage device, and configured to implement information interaction between the processor and the storage device.

In a fourth aspect, an embodiment of the present application provides a computer readable storage medium storing a computer program thereon, the computer program, executed by a processor, causes the processor to perform the method for determining the dependency relationship between services described in the first aspect.

### BRIEF DESCRIPTION OF DRAWINGS

Fig. 1 is a flowchart of a method for determining a dependency relationship between services according to an embodiment of the present application;
Fig. 2 is a flowchart of a method for determining a dependency relationship between services according to an embodiment of the present application;
Fig. 3 is a flowchart of a method for determining a dependency relationship between services according to an embodiment of the present application;
Fig. 4 is a schematic structural diagram of an apparatus for determining a dependency relationship between services according to an embodiment of the present application; and
Fig. 5 is a schematic structural diagram of an electronic device according to an embodiment of the present application.

### DETAIL DESCRIPTION OF EMBODIMENTS

In order to make those skilled in the art better understand the technical solutions of the present application, a method for determining a dependency relationship between services, an apparatus for determining a dependency relationship between services, an electronic device, and a computer readable storage medium are described in detail below with reference to the accompanying drawings.

Exemplary embodiments are described in detail below with reference to the accompanying drawings, but the present application may be embodied in different forms, and should not be construed as limited to the embodiments set forth herein. The embodiments are illustrated to make the present application more thorough and complete, and for those skilled in the art more fully understanding the scope of the present application.

As used herein, a term "and/or" includes any and all combinations of at least one of listed items.

The terms used in the present application are for a purpose of describing particular embodiments only, and are not intended to limit the present application. As used in the present application, singular forms "a" and "the" are intended to include plural forms as well, i.e., to represent at least one, unless the context clearly defines otherwise. It should further be understood that terms "includes/comprises" and/or "made of/consisted of" in the present application are used to specify a presence of at least one of recited features, integers, steps, operations, elements or components, but do not preclude a presence or an addition of at least one of other features, integers, steps, operations, elements, components or groups thereof.

The embodiments of the present application may be described with reference to plan and/or cross-sectional views with the help of idealized schematic illustrations of the present application. Therefore, the example illustrations may be modified in accordance with manufacturing techniques and/or tolerances. The embodiments of the present application are not limited to those shown in the accompanying drawings, but include modifications of any configuration formed based on a manufacturing process. Therefore, areas illustrated in the accompanying drawings have schematic properties, and shapes of the areas illustrated in the accompanying drawings illustrate specific shapes of the areas of elements, but are not limiting.

Unless otherwise defined, meanings of all terms (including technical terms and scientific terms) used herein are the same as meanings commonly understood by one of ordinary skill in the art. It should further be understood that terms, such as those defined in common dictionaries, should be construed as having a meaning that is consistent with that in background of the existing art and the present application, and should not be construed as having an idealized or over-formal meaning, unless expressly defined in the present application.

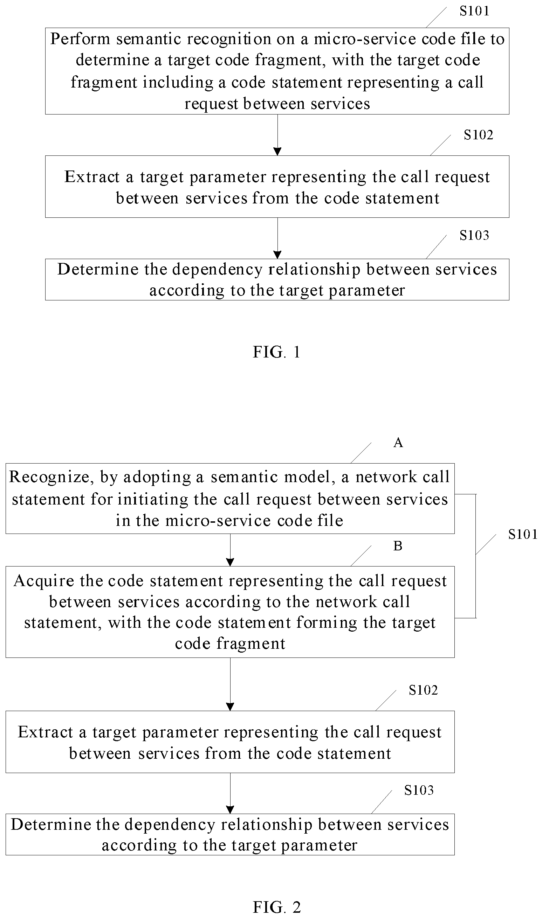

Fig. 1 is a flowchart of a method for determining a dependency relationship between services according to an embodiment of the present application, an execution subject of the method is an apparatus for determining a dependency relationship between services provided in an embodiment of the present application, and the apparatus may be integrated in a terminal device (e.g., a mobile terminal, a tablet computer, or a desktop computer) or a server. As shown in Fig. 1, the method for determining the dependency relationship between services includes following operations S101 to S103.

At operation S101, performing semantic recognition on a micro-service code file to determine a target code fragment, the target code fragment including a code statement representing a call request between services.

In some implementations, the micro-service code file may be obtained in a non-intrusive destruction and non-message interception manner during a source code and an initialization file being output by a project, and a relatively complete dependency relationship between services can be obtained through the micro-service code file. A code file of a micro-service application program may be of many forms, and may be, for example, source code, byte code, or binary code. A form of the micro-service code file in the embodiment of the present application is related to an execution process of a programming language employed by the micro-service application program. Different programming languages have different forms of code files, and correspondingly, most suitable forms of the code files for semantic recognition and analysis are also different for different programming languages.

For example, for different programming languages, the most suitable forms of the code files for semantic recognition and analysis are shown in Table 1 below.

**Table 1**

| Programming Language | Java | Python | Go | JavaScript | Ruby | C# |
|---|---|---|---|---|---|---|
| Source Code | √ | √ | √ | √ | √ | √ |
| Byte Code | √ | √ | × | × | √ | √ |
| Binary Code | × | × | √ | × | × | × |

For example, for Java language, there are many mature static analysis tools operating at a byte code level, and in order to facilitate analysis, a byte code file may be used as the code file in the embodiment of the present disclosure. For example, for Go language, a source code file or a binary code file may be used as the code file in the embodiment of the present disclosure. In addition to the source code, some external files (e.g., proto files and service deployment files) contain important information related to the call request between the services, and thus each may also be used as the code file to be parsed and processed.

Since an amount of code corresponding to one micro-service application program is relatively huge, and if all corresponding amounts of code are scanned and analyzed, much time and resources are consumed, therefore, in the embodiment of the present disclosure, in order to reduce a search range and optimize the analysis, code statements useful for determining the dependency relationship between services may be recognized from the micro-service code file, the code statements may represent the call request between services, and since calls between services in one micro-service application are limited, i.e., there are a relatively small number of calls between services in one micro-service application, and there is also a limited number of code statements representing the call request between the services, and further, the dependency relationship between services can be determined quickly and accurately according to the small number of code statements.

At operation S102, extracting a target parameter representing the call request between services from the code statement.

The code statement is a code expression representing the call request between services, and the code expression contains a target parameter representing a call relationship between services. The target parameter corresponding to the call request between services varies as a type of the call requests between services. That is, different target parameters are for different types of call requests between services. For example, the target parameters corresponding to different call requests between services are shown in Table 2 below.

**Table 2**

| Type | Target Parameter |
|---|---|
| HTTP Call | Target Service, Method, Path |
| gRPC Call | Target Service, Path |
| TCP Call | Target Service, Port |

At operation S103, determining the dependency relationship between services according to the target parameter.

The target parameter includes a call relationship between services. For example, the target parameter Path of the HTTP call or the gRPC call is a call path indicating the call relationship between services, so that the dependency relationship between services can be determined according to the target parameter Path. For example, the target parameter Port of the TCP call is a call port indicating the call relationship between services, so that the dependency relationship between services can be determined according to the target parameter Port.

Following target code fragment is illustrated as an example:

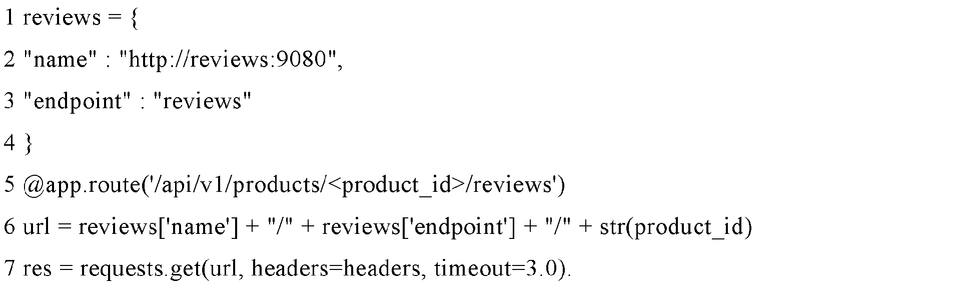

Following target parameter can be extracted based on the above target code fragment:

```
 {
 "type": "HTTP",
 "url": "http://reviews:9080/reviews/*",
 "path": "/reviews/*",
 "method": "GET"
 }.
```

According to the target parameter, a path of a called service can be determined as follows: http:// reviews:9080/reviews/*, and the called service can further be determined according to the above path of the service.

If there are more dependency relationships between services to be determined, unified extraction may be performed based on determined target code fragments, so as to generate one manifest file, such as JSON manifest file, and the dependency relationships between services are described by the manifest file. In order to improve processing efficiency, each target code fragment may be scanned in a taint propagation manner, and then the target parameter is determined according to the scanned result.

In the embodiment of the present disclosure, for determining the dependency relationship between services, on one hand, the micro-service code file is used, and since the micro-service code file contains all call relationships between services, the integrity of the dependency relationship between the services determined according to the micro-service code file can be ensured; on the other hand, the target code fragment representing the call request between services is determined by performing semantic recognition on the micro-service code file, so that an effective code fragment can be accurately positioned, a search space is reduced and analysis is optimized, and the processing efficiency is further improved.

In some implementations, as shown in Fig. 2, the operation S101 specifically includes following operations A and B.

At operation A, recognizing, by adopting a semantic model, a network call statement, for initiating the call request between services, in the micro-service code file.

If any service initiates the call request between services, there is a code statement corresponding to the call request in the micro-service code file, and the code statement is the network call statement. In the embodiment of the present disclosure, a pre-created semantic model is used to perform semantic recognition on the micro-service code file to determine the network call statement for initiating the call request between services. The semantic model may be created based on an internal communication mode between services in the micro-service application, and a specific creation process for creating the semantic model is described in following implementations.

An example of a process of determining the network call statement is described below, following is a piece of source code including code statements import requests and res=requests.get (url, heads=heads, timeout=3.0), and the semantic model is used to recognize the above code statements for initiating the call request between services, so as to determine that the network call statement is res=requests.get (url, heads=heads, timeout=3.0).

An example of the source code is:

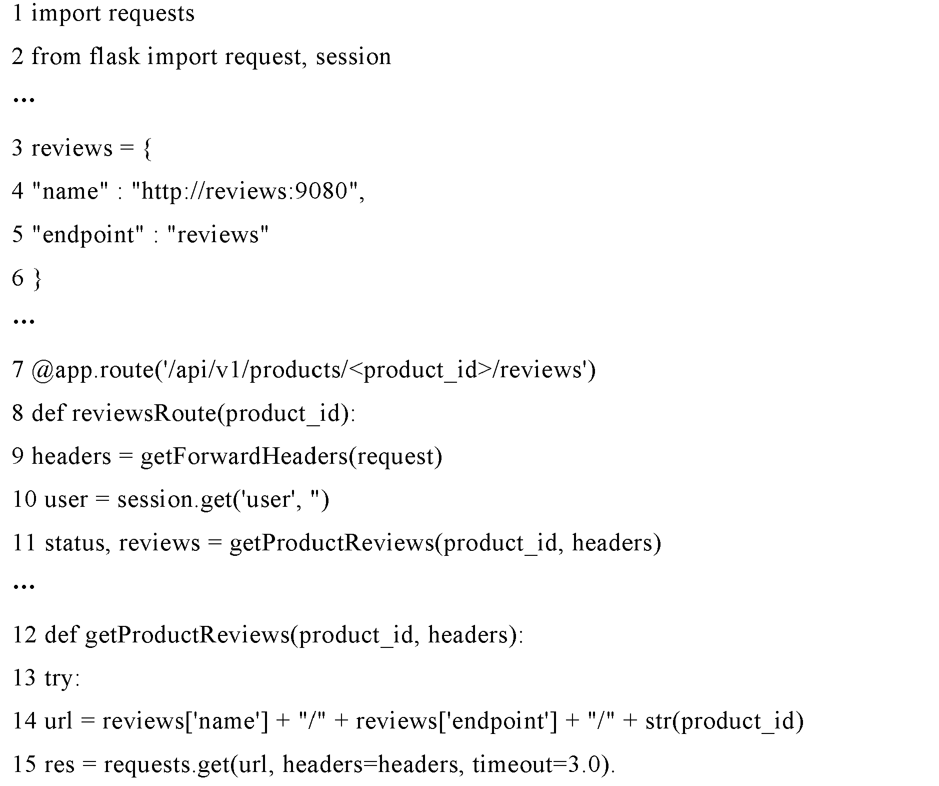

At operation B, acquiring the code statement representing the call request between services according to the network call statement, the code statement forming the target code fragment.

In some implementations, after the network call statement is determined, a called code statement may be determined based on the network call statement, and the code statement representing the call request between services may be obtained based on the called code statement. Taking the above source code as an example, the network call statement res=requests.get(url, headers= headers, timeout=3.0) contains parameters url and headers, the call statement url= reviews['name']+"/"+reviews['endpoint']+"/"+str(product_id) corresponding to the parameter url may be determined based on the parameter url, and the call statement headers = getForwardHeaders(request) corresponding to the parameter headers may be determined based on the parameter headers, since a parameter in the call statement headers = getForwardHeaders(request) is an input parameter request, a search process for the call statement is ended. A parameter reviews in the call statement url = reviews['name'] + "/" + reviews['endpoint'] + "/" + str(product_id) is a method parameter, so that a call statement corresponding to the parameter reviews is further determined as follows:

```
 3 reviews = {
 4 "name" : "http://reviews:9080",
 5 "endpoint" : "reviews"
 6 }.
```

Since parameters name and endpoint in the method parameter reviews are constants, the search process for the call statement is ended. Based on the above search process, the code statement representing the call request between services in the above example is determined as follows:

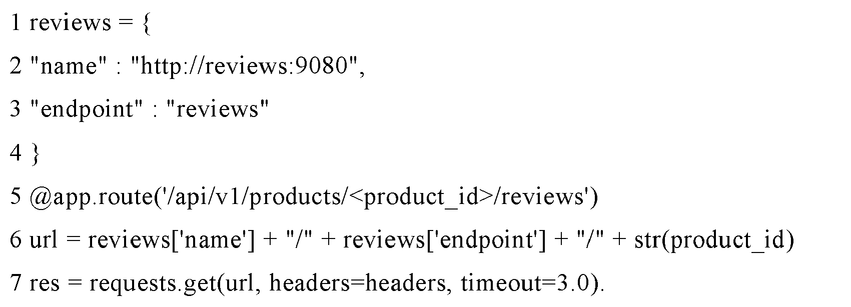

In some implementations, in order to improve the recognition efficiency, the operation S101 further includes an operation S104.

At operation S104, recognizing, by adopting the semantic model, a first parameter representing a call type of the call request between services in the micro-service code file and acquiring a second parameter to be concerned by the code statement.

In some implementations, after creating the semantic model, the semantic model is enhanced based on semantic information, the semantic information describes the call type of the call request between services, and indicates a key parameter (i.e., the second parameter) to be concerned in a subsequent process of obtaining the code statement. For example, the semantic model may be a type of method, and based on the above example of the source code, the following type of method may be set as the semantic model, in an example of the type of method, the semantic model includes the first parameter, i.e., a type HTTP of the call request between services, second parameters Method and url.

The example of the semantic model (i.e., the type of method) is:
Library: requests
Method: get(url, params=None, **kwargs)
Semantics: HTTP-GET
Key parameters: url (Semantics: HTTP-URL).

Correspondingly, the operation B may specifically include: acquiring the code statement representing the call request between services according to the network call statement and the second parameter.

Based on the above example of the source code and the semantic model, the parameter url in the network call statement res=requests.get(url, headers= headers, timeout=3.0) is the second parameter, and the call statement corresponding to the parameter url can be further determined based on the parameter url only, compared with the above implementation process of the operation B, a call process of the parameter headers is not expected to be searched, thus the call process of any unnecessary parameter can be omitted and the processing efficiency is further improved.

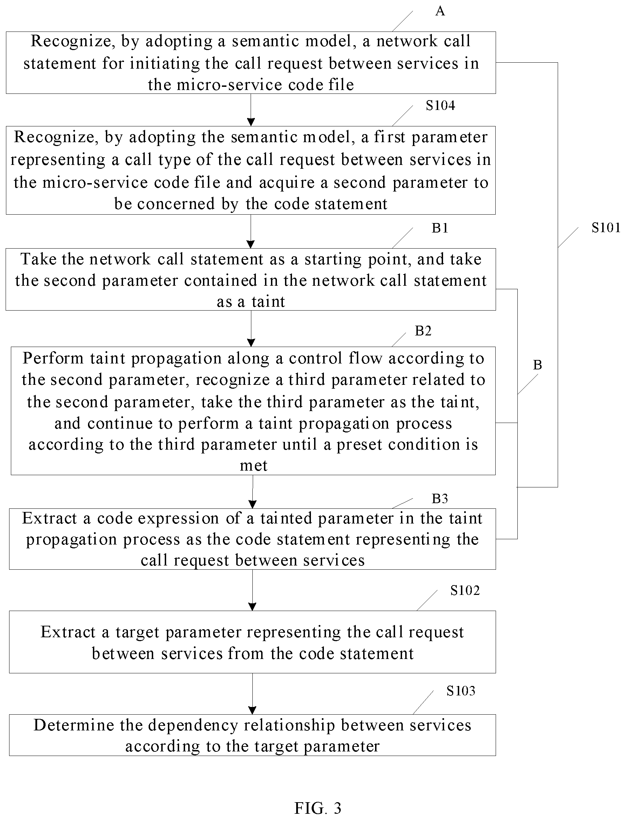

In some implementations, in order to further improve the recognition efficiency and the recognition speed for recognizing the target code fragment, the code statement forming the target code fragment may be determined by means of taint propagation, and as shown in Fig. 3, the operation B specifically includes following operations B1 to B3.

At operation B1, taking the network call statement as a starting point, and taking the second parameter contained in the network call statement as a taint.

Based on the above example of the source code and the semantic model, it can be determined that the network call statement in the above example is res=requests.get(url, headers= headers, timeout=3.0), correspondingly, the second parameter is url, and then, starting from the network call statement res=requests.get(url, headers= headers, timeout=3.0), the second parameter url is used as the taint to perform taint propagation.

At operation B2, performing taint propagation along a control flow according to the second parameter, recognizing a third parameter related to the second parameter, taking the third parameter as the taint, and continuing to perform a taint propagation process according to the third parameter until a preset condition is met.

The taint propagation performed along a reverse direction or a forward direction of the control flow depends on whether the network call statement is a call statement or a called statement, if the network call statement is the call statement, the taint propagation is performed along the reverse direction of the control flow, if the network call statement is the called statement, the taint propagation is performed along the forward direction of the control flow. Based on the above example of the source code, the taint propagation is performed along the reverse direction of the control flow. The taint is transferred from the parameter url (i.e., the second parameter) in the network call statement to the method parameter reviews (i.e., the third parameter) in the statement url = reviews['name'] + "/" + reviews['endpoint'] + "/" + str(product_id) along the reverse direction of the control flow, and is transferred to related parameters name and endpoint in the method parameter reviews, and the taint propagation process is ended. The preset condition for ending the taint propagation is a parameter assigned by a constant or comes from an input parameter.

In some implementations, the taint propagation process is different for different code statements, and there are mainly following three cases.

In a first case, according to an assignment statement in the micro-service code file, the taint propagation process includes: transferring the taint from a tainted parameter in a left side expression of the assignment statement to a parameter in a right side expression of the assignment statement.

In a second case, according to the call statement in the micro-service code file, the taint propagation process includes: transferring the taint from a tainted method parameter to a parameter in a call statement calling a method corresponding to the method parameter.

In a third case, according to a return value in the micro-service code file, the taint propagation process includes: if the return value is tainted, starting from a return statement of a corresponding method of the return value, performing taint propagation in a method body of the corresponding method.

At operation B3, extracting a code expression of a tainted parameter in the taint propagation process as the code statement representing the call request between services.

Based on the above example of the source code and the semantic model, the target code fragment may be finally determined as follows:

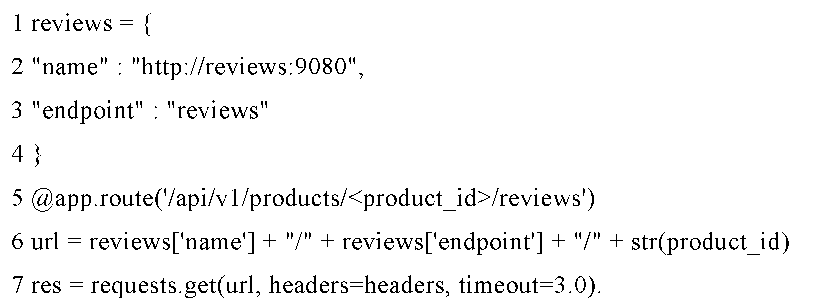

In some implementations, the method for determining the dependency relationship between services further includes a process of creating the semantic model, the process includes: acquiring a call library between services according to an internal communication mode between services in the micro-service application; and creating the semantic model according to the call library between services.

Because internal communication modes between services in the same micro-service application are relatively uniform, a total number of introduced call libraries between the services is limited. Therefore, a working load can be reduced by performing targeted semantic model modeling based on the call libraries between services. For example, an application program interface called by the gRPC request is defined in a corresponding .proto file, and automatic modeling can be performed by parsing the file to obtain a corresponding semantic model, so as to assist in recognizing which statements actually originate the gRPC request.

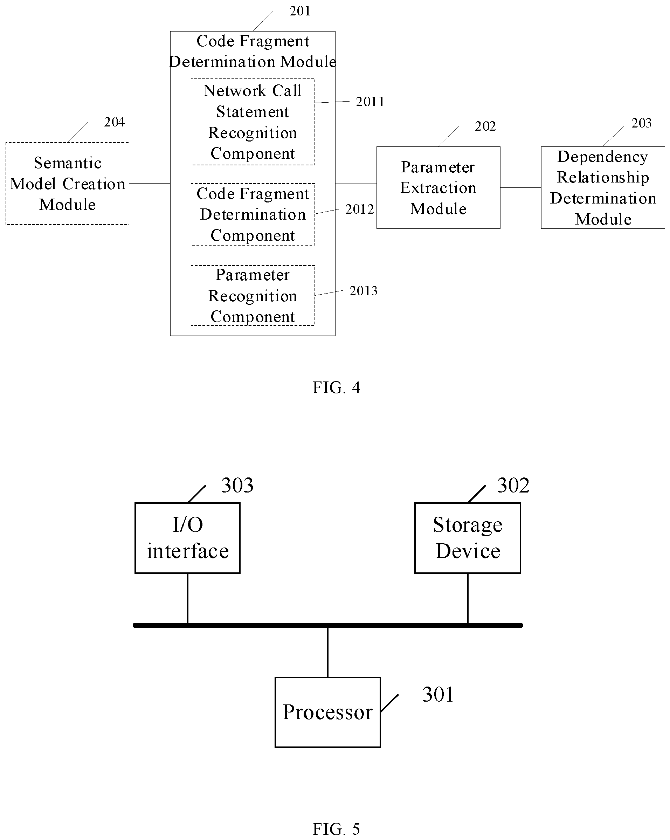

Fig. 4 is a schematic structural diagram of an apparatus for determining a dependency relationship between services according to an embodiment of the present application, the apparatus may be implemented in software or hardware, and may be integrated in a terminal device or a server. As shown in Fig. 4, the apparatus for determining the dependency relationship between services includes a code fragment determination module 201, a parameter extraction module 202 and a dependency relationship determination module 203.

The code fragment determination module 201 is configured to perform semantic recognition on a micro-service code file to determine a target code fragment, the target code fragment including a code statement representing a call request between services.

The parameter extraction module 202 is configured to extract a target parameter representing the call request between services from the code statement.

The dependency relationship determination module 203 is configured to determine the dependency relationship between services according to the target parameter.

In some implementations, the code fragment determination module 201 includes a network call statement recognition component 2011 and a code fragment determination component 2012.

The network call statement recognition component 2011 is configured to recognize, by adopting a semantic model, a network call statement for initiating the call request between services in the micro-service code file.

The code fragment determination component 2012 is configured to acquire the code statement representing the call request between services according to the network call statement, the code statement forming the target code fragment.

In some implementations, the code fragment determination module 201 further includes a parameter recognition component 2013.

The parameter recognition component 2013 is configured to recognize, by adopting the semantic model, a first parameter representing a call type of the call request between services in the micro-service code file and acquire a second parameter to be concerned by the code statement.

The code fragment determination component 2012 is specifically configured to acquire the code statement representing the call request between services according to the network call statement and the second parameter.

In some implementations, the code fragment determination component 2012 is specifically configured to take the network call statement as a starting point, and take the second parameter contained in the network call statement as a taint; perform taint propagation along a control flow according to the second parameter, recognize a third parameter related to the second parameter, take the third parameter as the taint, and continue to perform a taint propagation process according to the third parameter until a preset condition is met; and extract a code expression of a tainted parameter in the taint propagation process as the code statement representing the call request between services.

In some implementations, the code fragment determination component 2012 is specifically configured to transfer the taint from a tainted parameter in a left side expression of an assignment statement to a parameter in a right side expression of the assignment statement according to the assignment statement in the micro service code file.

In some implementations, the code fragment determination component 2012 is specifically configured to transfer the taint from a tainted method parameter to a parameter in a call statement calling a method corresponding to the method parameter according to the call statement in the micro-service code file.

In some implementations, the code fragment determination component 2012 is specifically configured to perform, according to a return value in the micro-service code file, taint propagation in a method body of a corresponding method by starting from a return statement of the corresponding method of the return value, in response to that the return value is tainted.

In some implementations, the apparatus for determining the dependency relationship between services further includes a semantic model creation module 204.

The semantic model creation module 204 is configured to acquire a call library between services according to an internal communication mode between services in the micro-service application, and create the semantic model according to the call library between services.

A specific structure and operation principle of each module may refer to corresponding description in the method, and are not repeated herein.

An embodiment of the present application further provides an electronic device, referring to Fig. 5, including: at least one processor 301; a storage device 302 storing at least one computer program thereon, the at least one computer program, executed by the at least one processor 301, causes the at least one processor 301 to implement the method for determining the dependency relationship between services described above; and at least one I/O interface 303 connected between the processor 301 and the storage device 302, and configured to implement information interaction between the processor 301 and the storage device 302.

The processor 301 is a device having a capability of processing data, includes, but is not limited to, a Central Processing Unit (CPU), and the like; the memory 302 is a device having a capability of storing data, includes, but is not limited to, a random access memory (RAM, in particular, SDRAM, DDR, and the like), a read only memory (ROM), an electrically erasable programmable read only memory (EEPROM), and a FLASH; the I/O interface 303 is connected between the processor 301 and the storage device 302, can implement information interaction between the processor 301 and the storage device 302, and includes, but is not limited to, a data Bus, and the like.

In some implementations, the processor 301, the memory 302, and the I/O interface 303 are connected together through a bus, and are further connected to other components of a computing device.

An embodiment of the present application further provides a computer readable storage medium storing a computer program thereon, the computer program, executed by a processor, causes the processor to perform the method for determining the dependency relationship between services described above.

It should be understood by those of ordinary skill in the art that all or some of the operations in the method, the functional modules/components in the apparatuses described above may be implemented as software, firmware, hardware, or suitable combinations thereof. In a hardware implementation, the division between the functional modules/components stated above does not correspond to the division of physical components; for example, one physical component may have a plurality of functions, or one function or operation may be performed through a cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be allocated on a computer-readable medium, the computer-readable medium may include computer storage medium (or non-transitory medium) and communication medium (or transitory medium). The computer storage medium includes volatile/nonvolatile or removable/non-removable medium used in any method or technology for storing information (such as computer-readable instructions, data structures, program modules and other data). The computer storage medium includes, but is not limited to, a Random Access Memory (RAM), a Read-Only Memory (ROM), an Electrically Erasable Programmable Read-Only Memory (EEPROM), a flash memory or other memory techniques, a Compact Disc Read-Only Memory (CD-ROM), a Digital Video Disk (DVD) or other optical discs, magnetic cassettes, magnetic tapes, magnetic disks or other magnetic storage devices, or any other medium which can be used to store the desired information and can be accessed by a computer. The communication medium generally includes computer-readable instructions, data structures, program modules or other data in a modulated data signal, such as a carrier wave or other transmission mechanism, and may include any information delivery medium.

The present application illustrates the exemplary embodiments, and although specific terms are employed, they are used and should only be interpreted in a generic and descriptive meaning and not for purposes of a limitation. It is apparent to those skilled in the art that features, characteristics and/or elements described in connection with specific embodiments may be used alone or in combination with features, characteristics and/or elements described in connection with other embodiments, unless explicitly stated otherwise. Therefore, it should be understood by those skilled in the art that various changes in form and details may be made without departing from the scope of the present application as set forth in the appended claims.

## Claims

1. A method for determining a dependency relationship between services, comprising:
performing semantic recognition on a micro-service code file to determine a target code fragment, with the target code fragment comprising a code statement representing a call request between services;
extracting a target parameter representing the call request between services from the code statement; and
determining the dependency relationship between services according to the target parameter.

2. The method of claim 1, wherein the performing semantic recognition on a micro-service code file to determine a target code fragment comprises:
recognizing, by adopting a semantic model, a network call statement for initiating the call request between services in the micro-service code file; and
acquiring the code statement representing the call request between services according to the network call statement, with the code statement forming the target code fragment.

3. The method of claim 2, further comprising:
recognizing, by adopting the semantic model, a first parameter representing a call type of the call request between services in the micro-service code file and acquiring a second parameter to be concerned by the code statement;
the acquiring the code statement representing the call request between services according to the network call statement comprises:
acquiring the code statement representing the call request between services according to the network call statement and the second parameter.

4. The method of claim 3, wherein the acquiring the code statement representing the call request between services according to the network call statement and the second parameter comprises:
taking the network call statement as a starting point, and taking the second parameter contained in the network call statement as a taint;
performing taint propagation along a control flow according to the second parameter, recognizing a third parameter related to the second parameter, taking the third parameter as the taint, and continuing to perform a taint propagation process according to the third parameter until a preset condition is met; and
extracting a code expression of a tainted parameter in the taint propagation process as the code statement representing the call request between services.

5. The method of claim 4, wherein the taint propagation process comprises:
transferring the taint from a tainted parameter in a left side expression of an assignment statement to a parameter in a right side expression of the assignment statement according to the assignment statement in the micro service code file.

6. The method of claim 4, wherein the taint propagation process comprises:
transferring the taint from a tainted method parameter to a parameter in a call statement calling a method corresponding to the method parameter according to the call statement in the micro-service code file.

7. The method of claim 4, wherein the taint propagation process comprises:
according to a return value in the micro-service code file, in response to that the return value is tainted, starting from a return statement of a corresponding method of the return value, performing taint propagation in a method body of the corresponding method.

8. The method of any of claims 1 to 7, further comprising:
acquiring a call library between services according to an internal communication mode between services in a micro-service application; and
creating the semantic model according to the call library between services.

9. An apparatus for determining a dependency relationship between services, comprising:
a code fragment determination module configured to perform semantic recognition on a micro-service code file to determine a target code fragment, with the target code fragment comprising a code statement representing a call request between services;
a parameter extraction module configured to extract a target parameter representing the call request between services from the code statement; and
a dependency relationship determination module configured to determine the dependency relationship between services according to the target parameter.

10. An electronic device, comprising:
at least one processor;
a storage device storing at least one computer program thereon, the at least one computer program, executed by the at least one processor, causes the at least one processor to perform the method for determining the dependency relationship between services according to any of claims 1 to 8; and
at least one I/O interface connected between the processor and the storage device, and configured to implement information interaction between the processor and the storage device.

11. A computer readable storage medium storing a computer program thereon, the computer program, executed by a processor, causes the processor to perform the method for determining the dependency relationship between services according to any of claims 1 to 8.
